# FASCICULE DE BREVET EUROPEEN

(11) **EP 1 532 006 B1**
(45) Date de publication et mention de la délivrance du brevet: **06.04.2011**
(21) Numéro de dépôt: 03763760.0
(22) Date de dépôt: 09.07.2003
(51) Int. Cl.: B60C 5/12, B60C 19/00

(54) **ENSEMBLE MONTE TUBELESS POUR CYCLE, JANTE ET PNEUMATIQUE TUBELESS**
MONTIERTE SCHLAUCHLOSE ANORDNUNG FÜR RAD, FELGE UND SCHLAUCHLOSER REIFEN
MOUNTED TUBELESS ASSEMBLY FOR CYCLE, RIM AND TUBELESS TYRE

(30) Priorité: 15.07.2002 FR 0208931
(43) Date de publication de la demande: 25.05.2005
(73) Titulaire: Société de Technologie Michelin, 63000 Clermont-Ferrand Cedex 09 (FR); Michelin Recherche et Technique S.A., 1763 Granges-Paccot (CH)
(72) Inventeur: ALBERT, Loïc, F-63100 Clermont Ferrand (FR); MOREAU, Bernard, F-63100 Clermont-Ferrand (FR)
(74) Mandataire: Le Cam, Stéphane Georges Elie
(86) Numéro de dépôt international: PCT/EP2003/007368
(87) Numéro de publication internationale: WO 2004/007218

(56) Documents cités:
- EP-A- 0 790 141
- DE-A- 4 444 044
- DE-A- 19 729 824
- DE-U- 29 808 506
- US-A- 4 561 481
- US-A1- 2001 019 222

## Description

L'invention concerne un ensemble monté pour cycle, plus particulièrement pour bicyclette, constitué d'une jante et d'un pneumatique. L'invention vise également une jante pour une roue de cycle et un pneumatique pour cycle. L'invention vise plus particulièrement des cycles destinés à être associés à des pneumatiques devant fonctionner sans chambre à air, du type « tubeless ».

Une jante usuelle en une seule partie du type tubeless, notamment destinée à des véhicules automobiles, est constituée de différentes zones ; tout d'abord, en partant d'un bord extérieur de la jante, on trouve un rebord de jante, ou aile, dont le rôle essentiel est de retenir le bourrelet du pneumatique à l'état gonflé ; ensuite le siège du bourrelet, sur lequel repose le bourrelet du pneumatique et qui en assure le serrage, ainsi que l'étanchéité à l'air ; et enfin une gorge destinée à permettre le montage du pneumatique du fait de son diamètre inférieur à celui du rebord. Dans le cas d'une jante comportant des humps, ceux-ci sont présents entre le siège du bourrelet et la gorge qui autorise le montage. Les humps sont des bossages dont la fonction est d'éviter ou tout au moins de retarder la survenances d'un décoincement du pneumatique notamment en cas de baisse de pression.

Le procédé de montage usuel d'un pneumatique tubeless sur une telle jante consiste en différentes étapes qui sont les suivantes ; on commence par faire passer une partie du premier bourrelet par-dessus le rebord de jante et on place cette partie dans la gorge. On peut alors faire passer le reste du bourrelet par-dessus le rebord grâce à une légère ovalisation de la tringle correspondante du pneumatique. Il en est de même pour faire passer le second bourrelet par-dessus le rebord de la jante. Le montage est ensuite terminé par une étape finale de gonflage à une pression telle qu'elle assure la mise en place dés bourrelets sur les sièges en appui sur les rebords de jante. Durant cette dernière étape les bourrelets franchissent les humps qui forment un obstacle au passage desdits bourrelets jusqu'à leur siège respectif.

Les pneumatiques de bicyclette présentent quelques particularités ; en effet, les tringles sont très souples et la déformation de la zone basse peut donc être importante. Ceci ne va pas sans inconvénient dans le cas d'un pneumatique tubelèss puisque l'étanchéité doit être totale entre la jante et le pneumatique et plus précisément entre la jante et les bourrelets du pneumatique.

Bien que non limitée à de telles applications, l'invention sera plus particulièrement décrite en référence à des ensembles montés destinés à équiper des bicyclettes à usage routier. Une particularité de ces ensembles montés est que la pression de fonctionnement est de l'ordre de 8 bars.

Il est actuellement connu de réaliser des ensembles montés de type tubeless pour bicyclettes du type VTT (Vélo Tous Terrains) ; la pression de fonctionnement de tels pneumatiques est de l'ordre de 2 bars. Il a déjà été décrit, dans la demande de brevet EP 0 893 280 une jante améliorée qui facilite les conditions de gonflage d'un tel pneumatique tubeless et qui améliore la tenue du pneumatique à l'état gonflé en cas de choc latéral violent. Une telle jante se caractérise par la présence d'une part d'une gorge étroite qui favorise la phase de gonflage en assurant l'étanchéité entre les bourrelets et la jante ; et d'autre part, cette jante se caractérise par la présence en bordure de gorge de humps qui autorisent le maintien des bourrelets du pneumatique sur les sièges prévus à cet effet en cas de choc latéral violent notamment, par exemple en cas d'impact sur des cailloux.

L'utilisation de ce type de jante pour la réalisation d'ensemble monté destiné à une utilisation routière et donc amené à des pressions de l'ordre de 8 bars est impossible. Il s'avère que si effectivement l'utilisation d'une jante telle que celle décrite par la demande de brevet EP 0 893 280 permet d'amorcer avec certitude le gonflage du pneumatique, quelles que soient les caractéristiques des pneumatiques testés, il se produit au-delà d'une certaine pression un décoincement d'au moins un bourrelet et en conséquence un déjantage du pneumatique. En outre, les pressions atteintes lors du décoincement des bourrelets du pneumatique sont généralement inférieures à 8 bars et donc inférieures à la pression de fonctionnement communément requise et nettement inférieures aux pressions qui peuvent être atteintes dans des situations extrêmes telles que celle exposée précédemment.

La demanderesse a déjà réalisé des jantes d'un autre type pour la réalisation d'ensemble monté destiné à une utilisation routière. Une telle jante pour roue de cycle se caractérise par des sièges des bourrelets ayant, selon le profil de la jante dans un plan radial, une génératrice dont l'extrémité extérieure est sur un cercle de diamètre inférieur au diamètre du cercle sur lequel se trouve l'extrémité axialement intérieure, et ladite génératrice formant un angle avec l'axe de rotation du pneumatique compris entre 15 et 45 degrés.

On entend par « axiale », une direction parallèle à l'axe de rotation de la jante et par « radiale » une direction coupant l'axe de rotation de la jante et perpendiculaire à celui-ci. L'axe de rotation de la jante est l'axe autour duquel la jante tourne en utilisation normale. Le plan médian circonférentiel est un plan perpendiculaire à l'axe de rotation de la jante et qui divise la jante en deux moitiés. Un plan radial est un plan qui contient l'axe de rotation de lajante.

Les essais réalisés avec ces jantes montrent qu'il est possible d'atteindre la pression de service pour un usage routier lors du montage sans observer de décoincement des bourrelets.

Les améliorations apportées au profil de la jante ainsi conçue autorisent donc la réalisation d'un ensemble monté de type tubeless pour un usage routier avec la garantie d'un gonflage satisfaisant.

Le profil de jante ainsi défini permet de maintenir un contact jante/bourrelet à des pressions plus élevées que celles mesurées lors du décoincement du bourrelet sur une jante connue.

Toutefois, il apparaît qu'en conditions d'utilisation lorsque l'ensemble monté est soumis à des conditions extrêmes, il est possible d'observer un décollement du pneumatique voire un décoincement de celui-ci. La pression peut atteindre des valeurs de l'ordre de 11 bars lorsque les pneumatiques sont soumis à de telles conditions extrêmes, notamment lors de compétition durant lesquelles la température de l'air interne du pneumatique peut augmenter très sensiblement, et entraîner une augmentation de la pression. C'est par exemple le cas lors de freinages importants dans des descentes de col où le frottement du patin de frein sur la jante conduit à une telle élévation de température.

Les inventeurs se sont ainsi donnés pour mission la réalisation d'un ensemble monté constitué d'une jante et d'un pneumatique de type tubeless et ne présentant pas de risques, notamment de déjantage pour l'utilisateur, aux pressions habituellement requises pour ce type d'usage envisagé.

Ce but a été atteint selon l'invention par un ensemble monté de type tubeless pour cycle, constitué d'une jante et d'un pneumatique comportant notamment des bourrelets, ladite jante étant notamment constituée de deux ailes, accolées à deux sièges, destinés à recevoir les bourrelets d'un pneumatique, la jante et/ou le pneumatique comportant des moyens pour équilibrer la pression de l'air au niveau de la surface extérieure du pneumatique, dans les zones qui ne sont ni au contact du sol ni au contact de la jante, à une valeur inférieure à 2 bars.

L'équilibrage est avantageusement obtenu selon l'invention de manière quasi-instantanée selon un fonctionnement du type soupape de sécurité.

La surface extérieure du pneumatique est définie comme étant la surface qui n'est pas au contact de l'air de gonflage dudit pneumatique lorsque celui-ci est monté sur une jante.

Selon une variante avantageuse de l'invention, la jante et/ou le pneumatique comportent des moyens pour équilibrer la pression de l'air au niveau de la surface extérieure du pneumatique, dans les zones qui ne sont ni au contact du sol ni au contact de la jante, à la pression atmosphérique.

L'équilibrage de la pression est avantageusement obtenu par des moyens pour drainer l'air du pneumatique vers l'atmosphère lorsque au moins un des bourrelets n'est pas au contact d'un siège.

Selon l'invention, l'air qui passe entre le bourrelet du pneumatique et le siège de la jante, du fait du décollement du pneumatique notamment lorsque l'ensemble monté est soumis à des conditions extrêmes, peut être évacué vers l'atmosphère de sorte que la présence d'une pression élevée sous le bourrelet et/ou sur le flanc extérieur du pneumatique ne soit qu' éphémère.

Dans leur démarche, les inventeurs ont su mettre en évidence que quelles que soient les jantes utilisées pour des applications tubeless, elles peuvent présenter des faiblesses dans le coincement des bourrelets de pneumatique de type tubeless dans le cas d'utilisations en conditions extrêmes pour un usage considéré. Les études ont mis en évidence que lors de l'augmentation de la pression, la souplesse des tringles entraînent un passage de l'air sous le bourrelet entraînant une augmentation rapide et importante de la tension supportée par la tringle correspondant à un décollement du bourrelet par rapport au siège correspondant de la jante.

Les inventeurs ont ensuite su mettre en évidence que l'augmentation de la surface du bourrelet au contact de l'air, du fait de son décollement par rapport au siège de la jante, conduit à un décoincement du bourrelet à des pressions inférieures à celles devant être atteinte pour un même résultat lorsque le contact entre bourrelet et jante subsiste. Il s'ensuit donc que dès que la pression correspondant au décollement du bourrelet est atteinte, les risques de décoincement des bourrelets et de déjantage deviennent très importants.

L'invention propose également une jante adaptée à un tel ensemble monté, satisfaisant l'invention avec tous types de pneumatiques.

L'invention propose ainsi une Jante pour une roue de cycle, prévue pour recevoir un pneumatique comportant notamment deux tringles souples, pour former un ensemble monté, ladite jante étant constituée de deux ailes, accolées à deux sièges destinés à recevoir les bourrelets d'un pneumatique et séparés par un creux de jante, les ailes et/ou les sièges comportant sur leurs surfaces orientées vers la zone de réception du pneumatique au moins un canal conduisant l'air en dehors de ladite zone, ledit canal présentant un élargissement depuis une extrémité située dans la zone de réception vers l'autre extrémité débouchant en dehors de ladite zone.

Là zone de réception du pneumatique est délimitée par les ailes, les sièges, le creux de jante et une surface de révolution passant par le sommet des ailes.

Dans un mode de réalisation avantageux de l'invention, le canal est obturé par un matériau perméable ; une telle réalisation permet notamment d'éviter un encrassement dudit canal.

Selon une première variante de réalisation d'une jante selon l'invention, le canal est réalisé en relief au moins sur une partie de la surface des ailes.

La réalisation d'un canal en relief englobe un canal réalisé en creux, par exemple en réalisant des rainures, et un canal réalisé par la présence de bossages et encore des réalisations combinant des creux et des bosses. Dans un cas comme dans l'autre, le canal s'évase depuis la zone de réception du pneumatique vers l'extrémité du canal en dehors de ladite zone.

Selon cette variante de réalisation, lorsque les ailes comportent des crochets, le canal est réalisé en relief au moins sur le crochet.

Il est encore possible de prévoir selon cette variante un canal qui parcourt la totalité de la surface de l'aile et qui se prolonge sur une partie du siège de la jante ; une telle réalisation permet l'équilibrage de la pression lorsque le bourrelet se décolle légèrement du siège et reste au contact de l'aile. Un tel canal ne dépasse avantageusement pas les deux tiers de la largeur de la surface du siège de la jante.

Une jante selon cette première variante peut être, selon un premier mode de réalisation de l'invention, directement réalisé selon les techniques usuelles connues de l'homme du métier, telles que les techniques de cintrage, de roulage et de soudage, notamment utilisées pour la réalisation de jantes en aluminium.

Selon un autre mode de réalisation de l'invention, la jante est obtenue par l'association d'une ébauche de jante et d'au moins un élément rapporté qui vient former le canal en relieftel qu'il vient d'être défini selon l'invention.

Des variantes de l'invention selon ce dernier mode de réalisation peuvent encore prévoir que les éléments rapportés sont réalisés dans un matériau autre que celui de l'ébauche de la jante.

L'invention prévoit encore que les éléments rapportés peuvent être fixés sur l'ébauche de jante par tous moyens connus de l'homme du métier tels que par exemple par vissage, clipsage, sertissage, collage, ...

Selon une seconde variante de réalisation d'une jante selon l'invention le canal est un trou traversant les parois formant les ailes et/ou les sièges. Selon l'invention l'orifice le plus petit du trou débouche dans la zone de réception de la jante, de façon à obtenir un équilibrage de pression suffisamment rapide notamment pour ne pas trop perdre d'air de gonflage du pneumatique.

La forme évasée du trou, celui-ci possédant un orifice plus grand que l'autre, autorise d'une part un équilibrage de la pression rapide mais présente en outre d'autres avantages. Notamment lorsque le trou est réalisé dans la paroi de l'aile de la jante, celui-ci peut s'encrasser ; la forme évasée permet du fait de la pression d'obtenir un auto-nettoyage de l'orifice. Par ailleurs, ladite forme évasée permet encore d'éviter la création de bruit du fait de l'échappement d'air ou encore la création de turbulences qui pourraient perturber la rotation de la roue, notamment à grande vitesse.

Selon un mode avantageux de réalisation de cette seconde variante de réalisation de la jante selon l'invention la section du trou varie en continu dans l'épaisseur de la paroi. Selon un autre mode de réalisation, le trou est réalisé par deux trous coaxiaux de diamètres différents. Selon l'une ou l'autre de ces réalisations, le trou va permettre en outre de servir de témoin d'usure de la jante. En effet, la jante qui peut s'user du fait du frottement d'un patin de frein voit apparaître une variation du diamètre de l'orifice dudit trou qui peut être prévue pour indiquer un seuil d'usure à ne pas dépasser. Cette variation est avantageusement brutale dans le cas de deux trous coaxiaux.

Lorsqu'un tel trou est prévu dans la paroi formant le siège de jante, une premier mode de réalisation prévoit que ladite jante comporte plusieurs trous répartis sur la périphérie du siège. Un second mode de réalisation prévoit que la jante ne comporte qu'un trou placé dans une rainure formé sur ledit siège de jante pour laisser circuler l'air dans ladite rainure de manière que l'air soit conduit jusqu'au trou quelle que soit la zone de décollement du pneumatique sur la périphérie du siège de jante. Un troisième mode de réalisation combine plusieurs trous placés dans une rainure telle que celle du second mode de réalisation.

Une troisième variante de réalisation d'une jante selon l'invention prévoit que le canal est une combinaison des deux premières variantes, c'est-à-dire que l'invention prévoit de combiner un ou plusieurs trous, traversant les parois formant les ailes et/ou les sièges, et au moins un relief réalisé au moins sur une partie de la surface des ailes.

Selon une réalisation préférée de la jante selon l'invention, notamment pour une application de la jante à un usage routier, selon le profil de la jante dans un plan radial, les sièges des bourrelets ont une génératrice dont l'extrémité axialement extérieure est sur un cercle de diamètre inférieur au diamètre du cercle sur lequel se trouve l'extrémité axialement intérieure, ladite génératrice étant tronconique et formant un angle avec l'axe de rotation du pneumatique compris entre 15 et 45 degrés.

Un tel profil de jante favorise le montage d'un pneumatique de type tubeless sur ladite jante pour former un ensemble monté destiné à un usage routier.

Selon un mode de réalisation préférée de l'invention, la génératrice forme un angle avec l'axe de rotation du pneumatique compris entre 16 et 26 degrés. De préférence encore, l'angle de la génératrice est supérieur à 18°. De préférence encore l'angle est inférieur à 22° notamment pour simplifier la réalisation industrielle de la jante.

Selon une réalisation préférée de l'invention, la différence de diamètre entre les extrémités des génératrices des sièges des bourrelets est comprise entre 0.5 et 3 mm et de préférence encore cette différence est supérieure à 1 mm et de préférence encore elle est strictement supérieure à 2 mm. De telles différences de diamètres entre les extrémités de la génératrice des sièges de bourrelets favorisent le maintien d'un contact entre le bourrelet et le siège de jante lorsque la pression augmente.

De manière avantageuse, l'invention prévoit que la jante, dont la gorge est constituée d'un fond de gorge et de deux parois latérales, est telle qu'au moins les parties hautes des parois latérales font un angle d'au moins 35° et sont centrées sur le plan circonférentiel médian. Un tel angle va notamment favoriser le montage du pneumatique sur la jante ; en effet, la disposition des sièges de bourrelets peut être une difficulté pour le montage du pneumatique du fait notamment que cette disposition entraîne un franchissement plus important notamment en termes de déformation nécessaire des bourrelets lors du montage que ne l'impose une jante usuelle. La variante de réalisation de l'invention propose une paroi de gorge, tout au moins dans sa partie haute c'est-à-dire dans la zone immédiate avant le franchissement qui conduit au siège du bourrelet, dont la pente est moins raide que ce que propose les jantes usuelles ; une telle pente de paroi va permettre un franchissement « plus en douceur » en autorisant un glissement du bourrelet sur cette partie haute de la paroi.

Cette variante de réalisation va d'une part permettre d'assurer une meilleure mise en place des bourrelets sur leur siège et notamment une meilleure symétrie du positionnement desdits bourrelets. D'autre part, la déformation moins brusque des tringles des bourrelets permet de limiter les risques d'amorces d'endommagement desdites tringles.

Avantageusement encore, l'invention prévoit que les parties basses des parois de la gorge font un angle d'au plus 35° et sont centrées sur le plan circonférentiel médian. Une telle réalisation assure notamment une largeur suffisante du fond de gorge qui permet de recevoir les deux bourrelets du pneumatique avant que ne débute la phase de gonflage du montage dudit pneumatique sur la jante.

Selon une réalisation avantageuse de l'invention, les ailes de la jante comportent des crochets qui constituent un débord vers l'intérieur de la jante au sommet de chacune des ailes.

De préférence encore, les crochets constituent un débord vers l'intérieur de la jante d'au moins 0.5 mm par rapport à la surface de l'aile au point d'accrochage dudit crochet.

La présence de tels crochets permet d'augmenter l'efficacité du maintien du pneumatique sans observer de décoincement des bourrelets.

Une variante avantageuse de l'invention prévoit la présence de humps, disposés entre la gorge et les sièges des bourrelets, et plus précisément entre l'extrémité de la partie haute d'une paroi de la gorge et l'extrémité axialement intérieure d'un siège de bourrelet. Une telle réalisation peut également contribuer à favoriser un retard du décollement des bourrelets par rapport à la surface de la jante lorsque la pression augmente au sein du pneumatique. La fonction de ces humps est plus spécifiquement de maintenir les bourrelets sur leurs sièges notamment en cas de dégonflement du pneumatique ou de crevaison.

Selon un mode de réalisation avantageux de l'invention, la jante est obtenue par l'association d'une ébauche de jante et d'au moins un élément rapporté qui vient former les sièges des bourrelets tels qu'ils viennent d'être définis. Dans le cas de la présence de humps, l'invention peut. également prévoir selon cette variante que lesdits humps font parties des éléments rapportés. Lorsque la jante est réalisée avec des canaux en relief comme décrits précédemment les éléments rapportés sur une ébauche de jante peuvent encore être les mêmes que ceux qui viennent d'être évoqués et comporter l'ensemble de ces éléments.

Dans une variante avantageuse de l'invention, notamment dans le cas de la réalisation de pneumatique de type tubeless, la zone de la jante recevant le pneumatique forme un pont supérieur comportant un orifice pour la valve de gonflage.

Ledit orifice de gonflage est par ailleurs de préférence prévu dans la gorge de montage et de préférence encore dans le fond ou zone basse de ladite gorge. Une telle conception favorise le gonflage d'un pneumatique de type tubeless, l'air pouvant être introduit directement entre les bourrelets du pneumatique ceux-ci étant au préalable insérés dans la gorge de montage.

Selon une réalisation préférée de l'invention, la jante est reliée à un moyeu central de la roue par une pluralité de rayons fixés à un pont inférieur de la jante.

Il apparaît qu'avec des ensembles montés de type tubeless comportant une jante telle que décrite selon l'invention, pour un usage routier, il est possible d'atteindre des pressions de l'ordre de 11 bars, c'est-à-dire des pressions qui correspondent aux conditions les plus extrêmes auxquelles peuvent être soumis les ensembles montés, sans risque pour l'utilisateur et notamment sans risque de décoincement.

L'invention propose également un pneumatique adapté à un tel ensemble monté indépendamment de la jante telle que décrite selon l'invention.

L'invention propose ainsi un pneumatique pour cycle, de type tubeless, comportant notamment deux tringles souples, prévu pour être assemblé à une jante pour former un ensemble monté, ladite jante étant constituée de deux ailes, accolées à deux sièges et comportant une extrémité libre, ledit pneumatique comportant des moyens pour drainer l'air jusqu'à la partie extérieure desdites ailes, lesdits moyens s'étendant au moins depuis la partie des flancs venant au contact des ailes après montage jusqu'à la base des bourrelets venant au contact des sièges après montage.

Les moyens pour drainer l'air ne s'étendent avantageusement pas sur la base du bourrelet au-delà d'une distance correspondant aux deux tiers de la surface des sièges à partir de l'aile. Les moyens de drainage ne doivent pas risquer d'être trop proche du volume de gonflage pour ne pas risquer de créer un dégonflement du pneumatique en usage ordinaire.

Selon un premier mode de réalisation du pneumatique selon l'invention, les moyens pour drainer l'air sont des reliefs.

De préférence encore, les reliefs sont crées par ajout d'éléments supplémentaires sur les flancs du pneumatique.

Quel que soit le mode de réalisation, les moyens de drainage ainsi constitués doivent être conservés aux pressions correspondant aux conditions extrêmes ; le matériau constituant ces reliefs est avantageusement défini avec des propriétés de déformabilité en conséquence.

Selon un second mode de réalisation du pneumatique selon l'invention, les moyens pour drainer l'air sont des éléments complémentaires en matériau poreux fixés sur les flancs extérieurs du pneumatique et une partie de la base du bourrelet.

Un mode de réalisation préféré de l'invention prévoit un tissu textile fixé entre le flanc et la base du bourrelet ; les essais réalisés montrent qu'une telle réalisation permet de conserver l'effet drainant quelle que soit la pression qui s'exerce sur le tissu, celui-ci étant au moins pris entre l'aile de la jante et la pression du pneumatique s'exerçant au travers du flanc.

Selon une variante de réalisation du pneumatique selon l'invention, les bourrelets du pneumatique comportent au moins une lèvre et lesdites lèvres sont susceptibles d'être en appui sur au moins une partie des parois latérales de la gorge de montage, en condition de roulage, c'est-à-dire après montage du pneumatique sur la jante.

Un tel pneumatique favorise le montage d'un pneumatique de type tubeless sur ladite jante pour former un ensemble monté destiné à un usage routier. Les lèvres du pneumatique décrites selon cette variante de réalisation permettent notamment d'éviter un décollement du pneumatique lors du gonflage pour une utilisation routière.

Selon un premier mode de réalisation de cette variante de réalisation, les lèvres sont des excroissances des bourrelets obtenues lors de la fabrication desdits bourrelets.

Selon un autre mode de réalisation, les lèvres sont obtenues par l'association d'au moins un élément rapporté sur le bourrelet, ledit élément pouvant être dans un matériau autre que celui constituant les bourrelets.

Selon une réalisation préférée de l'invention les tringles du pneumatique présentent un module d'élasticité inférieur à 8 000 daN/mm². Au-delà d'une telle valeur le pneumatique serait moins sensible au décoincement du fait de la moindre souplesse de ses tringles. De préférence également, le module d'élasticité est supérieur à 3 000 daN/mm².

Le pneumatique est choisi avec un développement adapté à la jante, selon les pratiques usuelles.

D'autres détails et caractéristiques avantageux de l'invention ressortiront ci-après de la description d'un exemple de réalisation de l'invention en référence aux figures 1 à 6 qui représentent :
- figure 1a, un schéma d'une vue partielle en coupe radiale d'une jante pour roue de cycle,
- figure 1b, un schéma d'une vue partielle en coupe radiale d'un second type de jante pour roue de cycle,
- figure 2a, un schéma d'une vue partielle en coupe radiale d'un premier mode de réalisation d'une jante selon l'invention,
- figure 2b, un schéma d'une vue partielle en coupe radiale d'une variante de réalisation de ce mode de réalisation d'une jante selon l'invention,
- figure 3, un schéma d'une vue en perspective d'un second mode de réalisation d'une jante selon l'invention,
- figure 4, un schéma d'une vue en perspective d'un troisième mode de réalisation d'une jante selon l'invention,
- figure 5, un schéma d'une vue partielle en coupe radiale d'un ensemble monté selon l'invention,
- figure 6, un schéma d'une vue partielle en perspective d'un pneumatique selon l'invention,
- figure 7, un schéma d'une vue partielle en coupe radiale d'un pneumatique selon l'invention.

Les figures ne sont pas représentées à l'échelle pour en simplifier la compréhension.

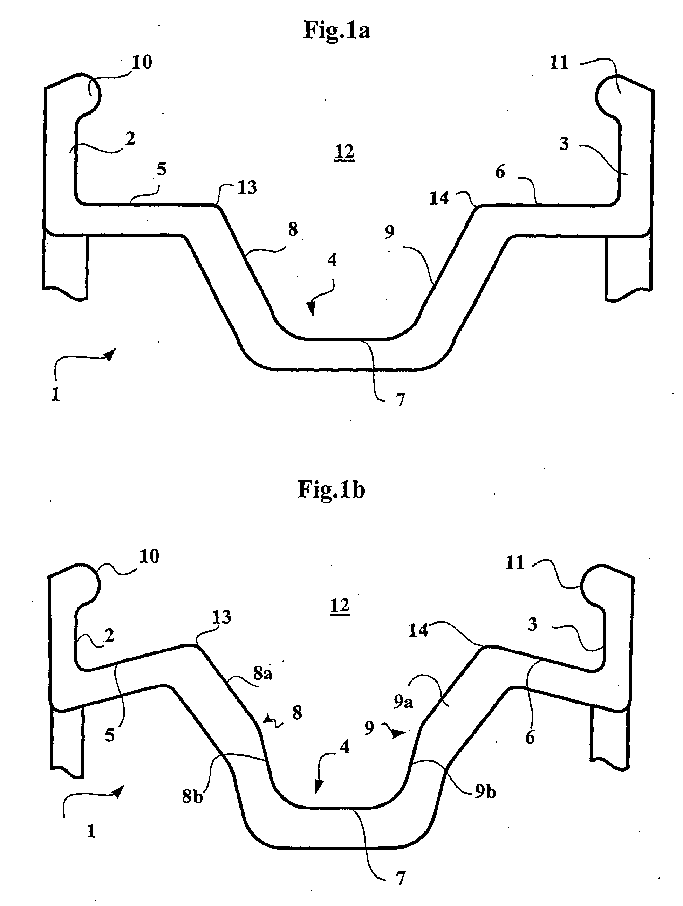

La figure 1a représente schématiquement un profil en coupe radiale d'une jante 1 pour roue de cycle. La jante 1 est constituée de deux ailes 2, 3 aux extrémités extérieures reliées à la gorge de montage ou creux de jante 4 par les sièges des bourrelets 5, 6. L'orientation des ailes 2 et 3 est sensiblement parallèle au plan médian circonférentiel. Là gorge 4 est constituée d'une part d'un fond de gorge 7 et de parois latérales 8, 9. Les ailes 2 et 3 présentent en outre dans leur partie supérieure des crochets 10, 11 qui constituent un débord vers l'intérieur de la jante de 0.5 mm par rapport au plan des ailes aux points d'accrochage desdits crochets.

Selon une variante dé réalisation représentée sur la figure 1b, les sièges des bourrelets 5 et 6 forment un angle avec l'axe de rotation d'environ 20°. La gorge 4 est constituée d'une part d'un fond de gorge 7 et de parois latérales 8, 9 inhabituellement inclinées par rapport à des jantes usuelles pour vélo. Ces parois 8 et 9 sont dans la représentation de la figure 1b réalisées en deux parties ; des premières parties basses 8b, 9b qui forment un angle d'environ 30° et sont centrées sur le plan circonférentiel médian et des secondes parties ou parties hautes 8a, 9a qui forment un angle d'environ 65° et sont centrées sur le plan circonférentiel médian.

La zone de réception 12 du pneumatique est définie comme étant l'espace délimité pair les ailes 2, 3, les sièges 5, 6 et la gorge 4.

Lors du montage d'un pneumatique de type tubeless, de forme traditionnelle, sur une telle jante, on commence par amener les-deux bourrelets du pneumatique dans la gorge 4 de la jantes

Cette première étape est simple de réalisation car les tringles des pneumatiques pour bicyclette sont usuellement réalisées en un matériau souple tel que par exemples une polyamide aromatique ou des fibres de verre. L'utilisation de tringles souples pour les pneumatiques de bicyclettes est notamment liée au besoin de simplifier le montage dudit pneumatique qui est généralement réalisé par l'utilisateur, éventuellement avec des outils simples et peu encombrants pour pouvoir être transportés. En outre, la souplesse de ces tringles permet également à l'utilisateur de transporter un pneumatique non monté, l'encombrement de celui-ci étant limité par le fait qu'il soit possible de le plier.

Dans une seconde étape, on gonfle le pneumatique ; pour cela, la jante 1 est munie d'une valve, non représentée sur les figures, avantageusement placée dans le fond de gorge 7 pour permettre d'injecter l'air directement entre les deux bourrelets du pneumatique. Le fond de gorge 7 est prévu avec une largeur telle qu'il puisse recevoir les deux bourrelets, ceux-ci étant en appui contre les parois 8 et 9 pour assurer l'étanchéité du système. Ce résultat est notamment obtenu dans le cas de 1a figure 1b par la présence des parois 8b et 9b inclinées notamment en partie basse de la gorge 4 qui permettent de réduire la largeur du fond de gorge 7 pour une largeur donnée de jante 1.

Dans le cas d'une jante telle que celle illustrée sur la figure 1b, la partie haute des parois 8a et 9a de la gorge 4 est avantageusement prévue avec une inclinaison plus importante que la partie basse desdites parois 8b et 9b pour permettre une ascension des bourrelets jusqu'aux sommets 13 et 14 de ces parois qui par rapport à des jantes usuelles, telles que celle illustrée sur la figure 1a, nécessitent une déformation plus importante des bourrelets du fait de leur hauteur. La forte inclinaison de la partie haute des parois 8a et 9a permet effectivement aux bourrelets d'atteindre ces sommets 13 et 14 de manière « douce » et sans à-coups, ce qui permet de conserver un contact étanche entre les bourrelets et les parois et en outre permet de faciliter le positionnement des bourrelets sur les sièges 5 et 6 de la jante 1, ledit positionnement étant obtenu de manière symétrique entre les deux bourrelets.

Les bourrelets du pneumatique sont ainsi mis en place sur les sièges 5 et 6 prévus à cet effet, au contact des ailes 2 et 3 qui retiennent lesdits bourrelets. Les crochets 10 et 11 des ailes 2 et 3 qui contribuent également au maintien du contact entre les bourrelets du pneumatique et les sièges 5 et 6 lorsque la pression augmente au sein du pneumatique.

La jante telle que représentée sur la figure 1b est plus particulièrement adaptée à la réalisation d'ensembles montés destinés à un usage routier

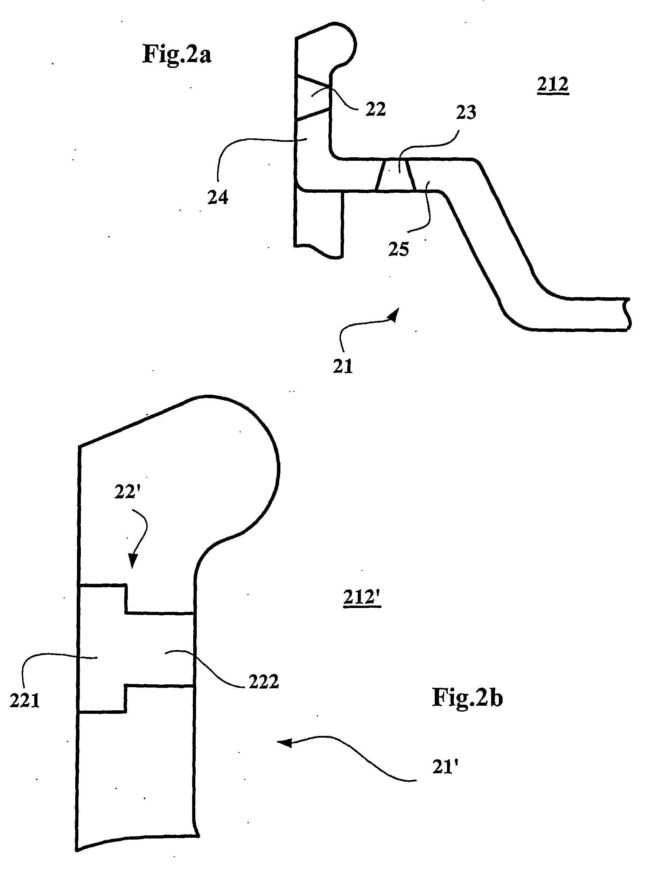

Sur la figure 2a est représentée schématiquement une premier mode de réalisation d'une jante 21 selon l'invention. Le profil selon un plan radial de cette jante 21 est avantageusement identique à celui de la jante 1 représentée sur la figure la. La jante 21 comporte des trous traversants 22, 23 respectivement dans l'aile 24 et au niveau du siège 25. Ces trous traversants créent une conduite d'air depuis la zone de réception du pneumatique vers une zone extérieure. L'un ou l'autre seulement de ces trous peut être présent. Ils sont avantageusement répartis sur tout le périmètre de la jante. Dans une variante de réalisation de l'invention, il est possible de réaliser un seul trou 22, 23 au fond d'une rainure circonférentielle.

Conformément à l'invention, les trous 22, 23 présentent une forme évasée depuis la zone de réception 212 du pneumatique vers l'extérieur de la jante 21. Une telle forme permet un équilibrage de la pression quasi-instantané.

Dans le cas du trou 22, l'équilibrage de la pression de l'air au niveau de la surface extérieure du pneumatique, dans les zones qui ne sont ni au contact du sol ni au contact de la jante, est réalisé à la pression atmosphérique.

Dans le cas du trou 23, il peut en être de même. Par contre, lorsque celui ci débouche sur une cavité intérieure et étanche de la jante 21, l'équilibrage de la pression de l'air au niveau de la surface extérieure du pneumatique, dans les zones qui ne sont ni au contact du sol ni au contact de la jante, est réalisé à une valeur inférieure à 2 bars.

La figure 2b illustre une variante de réalisation d'une jante 21' selon ce mode de réalisation l'invention dans le cas d'un trou traversant 22'. Ce trou 22' est constitué de 2 trous concentriques successifs 221, 222 ; dans le cas présent, le trou 222 débouchant dans la zone de réception du pneumatique 212' présente un diamètre inférieur au trou 221 qui débouche sur la paroi opposée de l'aile 22'. Le trou 221 débouche ainsi sur la paroi sur laquelle vient frotter le patin de frein. Le trou 22' peut être utilisé comme témoin d'usure de l'aile de jante ; en effet, l'usure de ladite aile du fait du frottement du patin va faire apparaître une variation du diamètre du trou dès lors que l'épaisseur usée correspondra à la longueur du trou 221. La longueur de ce premier trou 221 sera donc avantageusement choisie pour correspondre au seuil d'usure de la jante à ne pas dépasser.

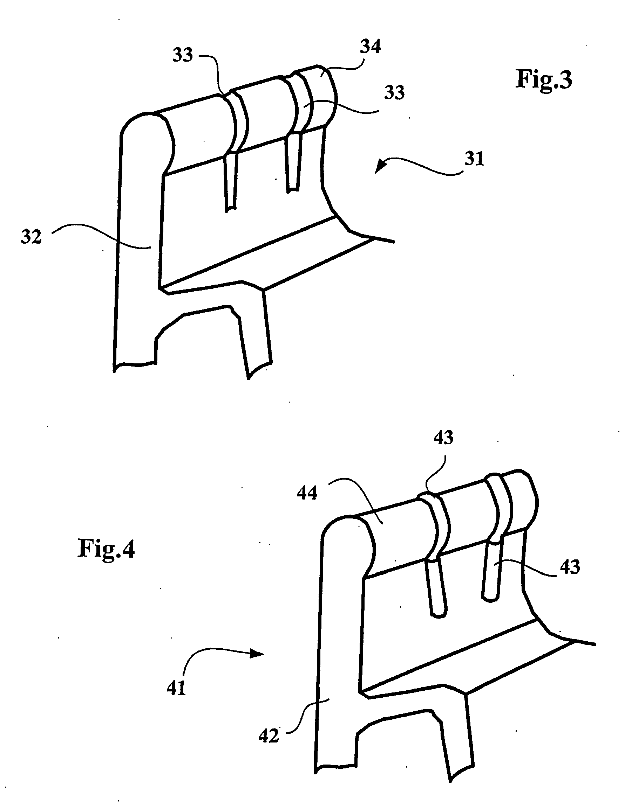

La figure 3 illustre un schéma d'une vue en perspective d'un second mode de réalisation d'une jante 31 selon l'invention. La jante 31 possède sur la surface de l'aile 32 orientée en direction de la zone de réception du pneumatique des rainures ou cannelures 33 qui s'étendent jusqu'au sommet des ailes et dans le cas de la jante représentée jusqu'au sommet du crochet 34. Conformément à l'invention, ces cannelures 33 présentent un évasement, la partie la plus large étant au niveau du sommet du crochet 34. Dans le cas représenté sur la figure 3, ces cannelures 33 s'étendent sur une partie seulement de l'aile 32 selon l'invention, elles peuvent s'étendre sur toute la hauteur de l'aile 32 et encore sur une partie du siège de la jante, et au plus sur les deux tiers du siège. Selon ces derniers cas de figures, l'évasement du canal ainsi formé est avantageusement réalisé d'une extrémité à l'autre.

La figure 4 illustre un schéma d'une vue en perspective d'un troisième mode de réalisation d'une jante 41 selon l'invention. La jante 41 possède sur la surface de l'aile 42 orientée en direction de la zone de réception du pneumatique des bossages ou reliefs 43 qui s'étendent, à la manière des cannelures 33 de la figure 3, jusqu'au sommet des ailes 42 et dans le cas de la jante représentée jusqu'au sommet du crochet 44. Ces bossages ou reliefs 43 sont orientés de façon à former un canal qui s'évase en direction du sommet du crochet 44. Egalement comme dans le cas de la figure 3, les bossages 43 peuvent s'étendre sur toute la hauteur de l'aile 42 et encore sur une partie du siège de la jante.

Dans le cas de la réalisation de la figure 3, la conduite de l'air depuis la zone de réception d'un pneumatique vers l'extérieur est assurée par les cannelures 33 dont le volume reste libre lorsque le pneumatique est monté sur la jante 31. Dans le cas de la figure 4, la conduite de l'air est assurée de la même façon par les rainures qui sont créées entre deux bossages 43.

La réalisation de jantes telles que celles décrites selon les figures 3 et 4 peut par exemple se faire par l'adjonction d'éléments complémentaires comportant soit des cannelures soit des bossages qui sont rapportés et fixés sur une ébauche de jante.

Une réalisation selon l'invention d'une jante de ce type, en plusieurs éléments, peut éventuellement permettre de simplifier la réalisation industrielle d'une telle jante dont le profil est complexe. Une telle réalisation peut par ailleurs autoriser la modification de jantes existantes par l'ajout desdits éléments supplémentaires. En effet, dans ce cas les éléments rapportés sont définis pour compléter le profil d'une jante existante afin d'obtenir le profil défini par l'invention.

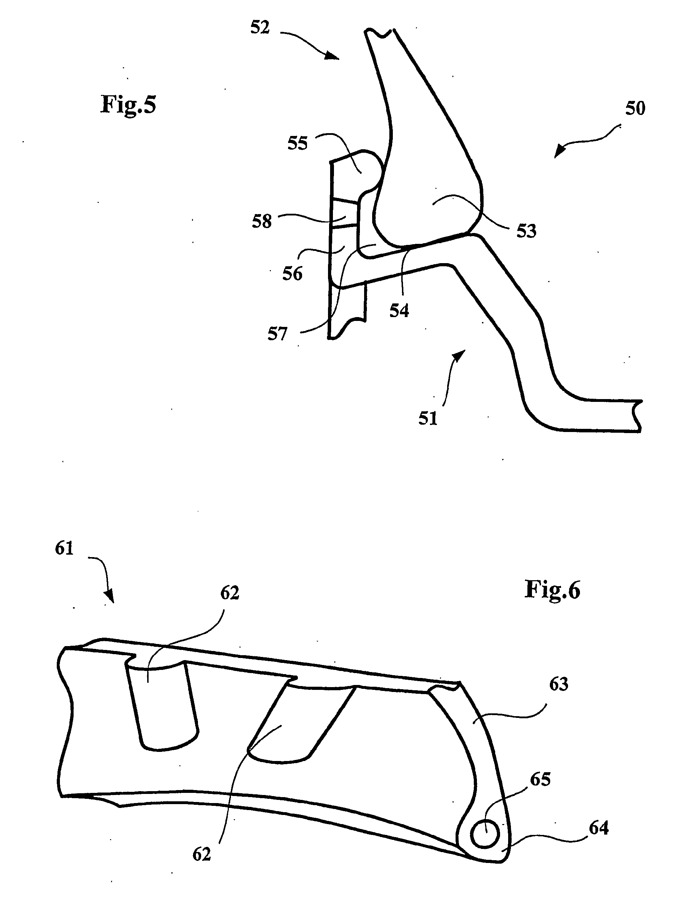

La figure 5 illustre un schéma d'une vue partielle en coupe radiale d'un ensemble monté 50 selon l'invention comprenant une jante 51 selon l'invention et un pneumatique 52 de type tubeless de structure traditionnelle. Le bourrelet 53 du pneumatique 52 repose sur le siège 54 de la jante 51 et assure l'étanchéité du volume de gonflage après montage. Le pneumatique 52 est également au contact de la jante 51 au niveau du crochet 55 ou partie haute de l'aile 56 de la jante 51. Ce contact est également étanche. En cas de surpression au sein du pneumatique par exemple lorsque l'ensemble monté 50 est soumis à des conditions extrêmes, il est possible d'observer un décollement du bourrelet 53 du siège 54. Dans une telle situation l'air de gonflage passe entre le bourrelet 53 et le siège 54 et s'engouffre dans la zone 57. Les essais et expériences menées par les inventeurs ont mis en évidence que la présence d'une pression élevée à la surface du bourrelet du pneumatique peut conduire dans ce cas de figure à un déjantage du fait notamment des tringles souples. En effet, les résultats obtenus montrent que l'augmentation de la surface du bourrelet au contact de l'air à une pression donnée conduit à une augmentation non négligeable de la tension supportée par la tringle. Dans le cas de surpression de l'ordre de 11 bars, l'augmentation de ladite tension peut conduire à un déjantage.

La jante 51 comporte selon l'invention des trous 58 répartis sur la périphérie de la jante qui permettent d'équilibrer la pression dans la zone 57 à la pression atmosphérique. Le profil évasé des trous 58 et leur nombre est ainsi défini pour que l'équilibrage se fasse de manière quasi-instantanée de sorte que le volume d'air qui s'échappe soit très faible avant que le bourrelet 53 ne reprenne sa position sur le siège 54 et recrée l'isolation étanche de la zone de gonflage au niveau de ce contact.

Les essais ont également montré que la présence des trous 58 selon l'invention améliore la mise en place du bourrelet lors du montage. En effet, les trous 58 permettent d'éliminer l'air qui se trouve emprisonné entre la jante et le pneumatique au niveau de la zone 57 et facilite ainsi la mise en place du pneumatique et plus précisément du bourrelet. En effet, il n'y a plus de risque d'observer une poche d'air occlus qui pourrait rendre difficile la mise en place du bourrelet voire conduire à une mauvaise mise en place de celui-ci et notamment à une mise en place dissymétrique.

Des essais ont été réalisés avec un ensemble monté tel que décrit sur la figure 5 dans une dimension 23-622 sur une jante de 622 selon une technologie tubeless. Les pneumatiques utilisés sont des pneumatiques de type tubeless dont les tringles présentent un module d'élasticité de 4000 daN/mm². Pour un usage routier, la pression de fonctionnement est généralement de 8 bars. Sachant comme il l'a été dit précédemment que dans des conditions extrêmes, la pression atteinte peut être supérieure, les essais sont réalisés jusqu'à l'obtention de ces conditions extrêmes.

Dans le cas de la jante selon l'invention, les essais ont montré que le montage d'un pneumatique tubeless sur cette jante peut être réalisé sans encombre à la pression de fonctionnement de 8 bars et dans les conditions extrêmes, notamment en termes d'échauffement, sans observer de décoincement.

La figure 6 illustre encore une variante de réalisation de l'invention selon laquelle le pneumatique 61 porte des zones en relief 62 au niveau de la partie basse du flanc 63 et/ou au niveau du bourrelet 64, comportant une tringle 65. Dans le cas de la figure 6, ces zones en relief 62 sont réalisées sur la partie basse du flanc de façon à permettre le passage de l'air vers l'espace extérieur à la zone de réception du pneumatique de la jante sur laquelle un tel pneumatique 61 est mis en place. Les conduites d'air sont prévues selon l'invention avec une forme évasée pour autoriser un équilibrage quasi-instantané de la pression à la pression atmosphérique et la reformation d'une étanchéité entre la base du bourrelet et le siège de jante.

Une conduite d'air est ainsi formée par un couple de zones en relief 62 ; la distance maximale entre les zones en relief 62 est avantageusement inférieure à 2 mm. Un tel dimensionnement permet d'éviter un fluage et/ou un écrasement de ces zones en relief 62 pour garantir le passage de l'air. La distance entre deux zones en relief 62 de deux couples voisins peut par contre être plus importante.

Dans une variante de réalisation de l'invention les zones en relief s'étendent jusqu'au niveau de la base du bourrelet sans aller de préférence au-delà d'une limite correspondant aux deux tiers du siège de jante lorsque le pneumatique est monté sur une jante.

Les zones en relief 62 sont de préférence réalisées par l'ajout d'un élément complémentaire réalisés dans un matériau non déformables à des pressions de l'ordre de 11 bars de façon à garantir la présence de conduite d'air lorsque celles-ci deviennent nécessaires. Cet élément complémentaire peut être rendu solidaire du pneumatique par tout moyen connu de l'homme du métier et notamment par collage, par vulcanisation, par assemblage mécanique,...

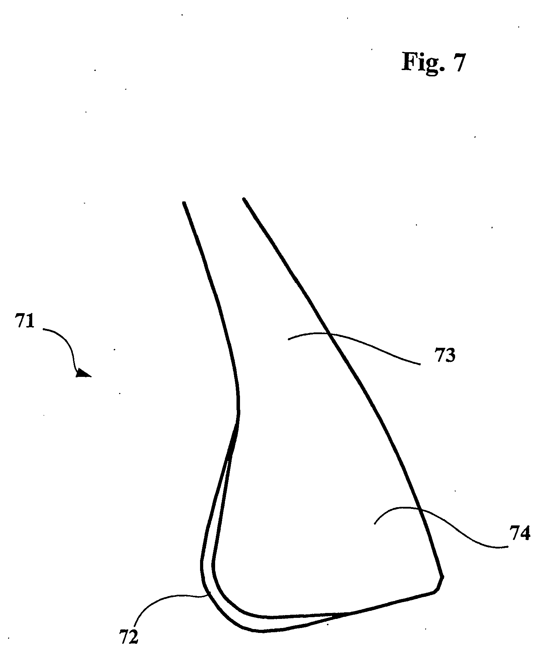

La figure 7 illustre un pneumatique 71 selon l'invention comportant un tissu textile fixé sur une partie du flanc 73 et sur une partie de la base du bourrelet 74. L'utilisation d'un tel tissu autorise une réalisation du pneumatique simplifiée. Par ailleurs, un tel tissu conserve ses propriétés de drainage de l'air y compris lorsqu'il est soumis à de fortes pressions. La fonction de drainage du tissu est assurée par la constitution des fils de tissu comportant une multitude de filaments.

La fonction drainage du tissu nécessite toutefois une mise en place dudit tissu textile et une orientation de celui-ci selon lesquelles au moins une extrémité d'un fil aboutit en dehors de la zone de réception du pneumatique de la jante. Une orientation préférée d'au moins une partie des fils du tissu textile est la direction radiale du pneumatique. L'utilisation d'un tissu comportant une nappe croisée de fils garantit quel que soit l'angle de pose du tissu, le respect de la condition énoncée ci-dessus, à savoir d'obtenir une extrémité d'au moins une partie des fils en dehors de la zone de réception du pneumatique de la jante, le dimensionnement dudit tissu et sa mise en place sur le pneumatique étant adaptés.

L'invention prévoit encore de combiner des jantes et des pneumatiques tels qu'ils viennent d'être décrit en référence aux figures.

L'utilisation d'une jante définie par l'invention et/ou d'un pneumatique selon l'invention permettent donc la réalisation d'ensembles montés tubeless, destinés à des bicyclettes pour un usage routier, qui ne présentent pas de risque de déjantage du fait de la pression de fonctionnement ou des pressions pouvant être atteintes dans des situations extrêmes.

De façon générale l'invention doit être comprise comme s'appliquant à tout type de roue devant être associée à des pneumatiques comportant des tringles souples et dont les pressions de fonctionnement sont relativement importantes et notamment supérieures à 5 bars. Il s'agit par exemple de roues pour des fauteuils roulants pour handicapés ou bien encore des roues des véhicules utilisées sur des véhicules à faible consommation tels que ceux du « Challenge Shell ».

## Revendications

1. Ensemble monté (50) de type tubeless pour cycle, constitué d'une jante (21, 21, 31, 41, 51) et d'un pneumatique (52, 61, 71) comportant notamment des bourrelets (53, 64, 74), ladite jante étant constituée de deux ailes (24, 32, 42, 56), accolées à deux sièges (25, 54), destinés à recevoir les bourrelets d'un pneumatique, **caractérisé en ce que** la jante et/ou le pneumatique comporte des moyens (22, 23, 22', 33, 43, 58, 62, 72) pour drainer l'air du pneumatique vers l'atmosphère lorsqu'au moins un des bourrelets n'est pas au contact d'un siège.

2. Ensemble monté selon la revendication 1, **caractérisé en ce que** les ailes (24, 32, 42, 56) et/ou les sièges (25) de la jante (21, 31, 41, 51) comportent sur leurs surfaces orientées vers la zone de réception (212, 212') du pneumatique au moins un canal (22, 23, 22', 33, 43, 58) conduisant l'air en dehors de ladite zone et **en ce que** ledit canal présente un élargissement (222, 221) depuis une extrémité située dans la zone de réception vers l'autre extrémité débouchant en dehors de ladite zone.

3. Ensemble monté selon la revendication 2, **caractérisé en ce que** le canal (43) est réalisé en relief au moins sur une partie de la surface des ailes (42) de la jante (41).

4. Ensemble monté selon la revendication 3, les ailes (42) de la jante (41) comportant des crochets (44), **caractérisé en ce que** le canal (43) est réalisé en relief au moins sur les crochets.

5. Ensemble monté selon la revendication 2, **caractérisé en ce que** le canal (22, 23, 22', 58) est un trou traversant les parois formant les ailes (24, 56) et/ou les sièges (25, 54) de la jante (21, 21', 51).

6. Ensemble monté selon la revendication 5, **caractérisé en ce que** la section du trou (22, 23, 22', 58) varie dans l'épaisseur de la paroi formant les ailes (24, 56) et/ou les sièges (25) de la jante (21, 21', 51).

7. Ensemble monté selon l'une des revendications 2 à 6, **caractérisé en ce que**, selon le profil de la jante (1) dans un plan radial, les sièges (5, 6) des bourrelets ont une génératrice dont l'extrémité axialement extérieure est sur un cercle de diamètre inférieur au diamètre du cercle sur lequel se trouve l'extrémité axialement intérieure et **en ce que** ladite génératrice est tronconique et forme un angle avec l'axe de rotation du pneumatique compris entre 15 et 45 degrés.

8. Ensemble monté selon la revendication 1, le pneumatique comportant notamment deux flancs (63, 73) reliés aux bourrelets (64, 74), **caractérisé en ce que** le pneumatique (61, 71) comporte des moyens (62, 72) pour drainer l'air jusqu'à la partie extérieure des ailes de la jante après montage, et **en ce que** lesdits moyens s'étendent au moins depuis la partie des flancs (63, 73) venant au contact des ailes après montage jusqu'à la base des bourrelets (64,74) venant au contact des sièges après montage.

9. Ensemble monté selon la revendication 8, **caractérisé en ce que** lesdits moyens (62) sont des reliefs et **en ce qu'**ils présentent un élargissement depuis une extrémité située dans la zone de réception après montage sur une jante vers l'autre extrémité débouchant en dehors de ladite zone.

10. Ensemble monté selon la revendication 9, **caractérisé en ce que** les reliefs (62) sont créés par ajout d'éléments supplémentaires sur les flancs (63) du pneumatique.

11. Ensemble monté selon la revendication 8, **caractérisé en ce que** les moyens (72) pour drainer l'air sont des éléments complémentaires en matériau poreux fixés sur les flancs (73) extérieurs du pneumatique.

12. Ensemble monté selon l'une des revendications 8 à 11, le pneumatique comportant notamment deux tringles (65) souples, **caractérisé en ce que** les tringles présentent un module d'élasticité inférieur à 8 000 daN/mm² et/ou supérieur à 3 000 daN/mm².

13. Utilisation d'un ensemble monté selon l'une des revendications 1 à 12 sur une bicyclette à usage routier.

## Claims

1. Mounted assembly (50) of the tubeless type for a cycle, consisting of a rim (21, 21', 31, 41, 51) and of a tyre (52, 61, 71) notably comprising beads (53, 64, 74), the said rim consisting of two flanges (24, 32, 42, 56) adjacent to two seats (25, 54) intended to accept the beads of a tyre, **characterized in that** the rim and/or the tyre comprises means (22, 23, 22', 33, 43, 58, 62, 72) for venting air from the tyre to the atmosphere when at least one of the beads is not in contact with a seat.

2. Mounted assembly according to Claim 1, **characterized in that** the flanges (24, 32, 42, 56) and/or the seats (25) of the rim (21, 31, 41, 51) comprise, on their surfaces directed toward the region (212, 212') that accepts the tyre, at least one channel (22, 23, 22', 33, 43, 58) leading air away from the said region, and **in that** the said channel has a widening (222, 221) from an end situated inside the accepting region towards the other end that opens up outside of the said region.

3. Mounted assembly according to Claim 2, **characterized in that** the channel (43) is produced in relief in at least part of the surface of the flanges (42) of the rim (41).

4. Mounted assembly according to Claim 3, the flanges (42) of the rim (41) comprising hooks (44), **characterized in that** the channel (43) is produced in relief at least on the hooks.

5. Mounted assembly according to Claim 2, **characterized in that** the channel (22, 23, 22', 58) is a hole passing through the walls that form the flanges (24, 56) and/or the seats (25, 54) of the rim (21, 21', 51).

6. Mounted assembly according to Claim 5, **characterized in that** the cross section of the hole (22, 23, 22', 58) varies in the thickness of the wall that forms the flanges (24, 56) and/or the seats (25) of the rim (21, 21', 51).

7. Mounted assembly according to one of Claims 2 to 6, **characterized in that**, along the profile of the rim (1) in a radial plane, the bead seats (5, 6) have a generatrix the axially outer end of which lies on a circle of a diameter smaller than the diameter of the circle on which the axially inner end lies, and **in that** the said generatrix is frustonical and makes an angle of between 15 and 45 degrees with the axis of rotation of the tyre.

8. Mounted assembly according to Claim 1, the tyre notably comprising two sidewalls (63, 73) connected to the beads (64, 74), **characterized in that** the tyre (61, 71) comprises means (62, 72) for venting air to the exterior part of the flanges of the rim after mounting, and **in that** the said means extend at least from that part of the sidewalls (63, 73) that comes into contact with the flanges after mounting as far as the base of the beads (64, 74) that come into contact with the seats after mounting.

9. Mounted assembly according to Claim 8, **characterized in that** the said means (62) are reliefs, and **in that** they widen from an end situated in the accepting region after mounting on a rim towards the other end that opens up outside said region.

10. Mounted assembly according to Claim 9, **characterized in that** the reliefs (62) are created by adding additional elements to the sidewalls (63) of the tyre.

11. Mounted assembly according to Claim 8, **characterized in that** the means (72) for venting the air are additional means made of porous material fixed to the external sidewalls (73) of the tyre.

12. Mounted assembly according to one of Claims 8 to 11, the tyre notably comprising two flexible bead wires (65), **characterized in that** the bead wires have an elastic modulus of below 8000 daN/mm² and/or above 3000 daN/mm².

13. Use of a mounted assembly according to one of Claims 1 to 12 on an on-road bicycle.

## Patentansprüche

1. Montierte schlauchlose Einheit (50) für ein Fahrrad, die aus einer Felge (21, 21', 31, 41, 51) und aus einem Luftreifen (52, 61, 71) besteht, der insbesondere Wülste (53, 64, 74) aufweist, wobei die Felge aus zwei Flügeln (24, 32, 42, 56) besteht, die an zwei Sitze (25, 54) angefügt sind, welche dazu bestimmt sind, die Wülste eines Luftreifens aufzunehmen, **dadurch gekennzeichnet, dass** die Felge und/oder der Luftreifen Einrichtungen (22, 23, 22', 33, 43, 58, 62, 72) aufweisen, um die Luft aus dem Luftreifen in die Atmosphäre abzulassen, wenn mindestens einer der Wülste nicht mit einem Sitz in Kontakt ist.

2. Montierte Einheit nach Anspruch 1, **dadurch gekennzeichnet, dass** die Flügel (24, 32, 42, 56) und/oder die Sitze (25) der Felge (21, 31, 41, 51) auf ihren zur Aufnahmezone (212, 212') des Luftreifens gerichteten Flächen mindestens einen Kanal (22, 23, 22', 33, 43, 58) aufweisen, der die Luft aus der Zone herausführt, und dass der Kanal eine Verbreiterung (222, 221) ausgehend von einem Ende, das sich in der Aufnahmezone befindet, bis zum anderen Ende aufweist, das außerhalb der Zone mündet.

3. Montierte Einheit nach Anspruch 2, **dadurch gekennzeichnet, dass** der Kanal (43) reliefartig auf mindestens einem Teil der Fläche der Flügel (42) der Felge (41) ausgebildet ist.

4. Montierte Einheit nach Anspruch 3, wobei die Flügel (42) der Felge (41) Nutpartien (44) aufweisen, **dadurch gekennzeichnet, dass** der Kanal (43) reliefartig mindestens auf den Nutpartien ausgebildet ist.

5. Montierte Einheit nach Anspruch 2, **dadurch gekennzeichnet, dass** der Kanal (22, 23, 22', 58) ein Loch ist, das die die Flügel (24, 56) und/oder die Sitze (25, 54) der Felge (21, 21', 51) bildenden Wände durchquert.

6. Montierte Einheit nach Anspruch 5, **dadurch gekennzeichnet, dass** der Querschnitt des Lochs (22, 23, 22', 58) in der Dicke der die Flügel (24, 56) und/oder die Sitze (25) der Felge (21, 21', 51) bildenden Wand variiert.

7. Montierte Einheit nach einem der Ansprüche 2 bis 6, **dadurch gekennzeichnet, dass**, je nach dem Profil der Felge (1) in einer radialen Ebene, die Sitze (5, 6) der Wülste eine Mantellinie haben, deren axial äußeres Ende sich auf einem Kreis mit einem Durchmesser befindet, der geringer ist als der Durchmesser des Kreises, auf dem sich das axial innere Ende befindet, und dass die Mantellinie kegelstumpfförmig ist und einen Winkel mit der Drehachse des Luftreifens bildet, der zwischen 15 und 45 Grad liegt.

8. Montierte Einheit nach Anspruch 1, wobei der Luftreifen insbesondere zwei Flanken (63, 73) aufweist, die mit den Wülsten (64, 74) verbunden sind, **dadurch gekennzeichnet, dass** der Luftreifen (61, 71) Einrichtungen (62, 72) aufweist, um die Luft nach der Montage bis zum äußeren Bereich der Flügel der Felge abzulassen, und dass die Einrichtungen sich mindestens von dem Bereich der Flanken (63, 73), der nach der Montage mit den Flügeln in Kontakt kommt, bis zur Basis der Wülste (64, 74) erstrecken, die nach der Montage mit den Sitzen in Kontakt kommt.

9. Montierte Einheit nach Anspruch 8, **dadurch gekennzeichnet, dass** die Einrichtungen (62) Reliefs sind, und dass sie eine Verbreiterung von einem Ende, das sich nach der Montage auf eine Felge in der Aufnahmezone befindet, zum anderen Ende aufweisen, das außerhalb der Zone mündet.

10. Montierte Einheit nach Anspruch 9, **dadurch gekennzeichnet, dass** die Reliefs (62) durch Hinzufügen von zusätzlichen Elementen auf die Flanken (63) des Luftreifens erzeugt werden.

11. Montierte Einheit nach Anspruch 8, **dadurch gekennzeichnet, dass** die Einrichtungen (72) zum Ablassen der Luft komplementäre Elemente aus porösem Material sind, die auf den Außenflanken (73) des Luftreifens befestigt sind.

12. Montierte Einheit nach einem der Ansprüche 8 bis 11, wobei der Luftreifen insbesondere zwei elastische Wulstkerne (65) aufweist, **dadurch gekennzeichnet, dass** die Wulstkerne einen Elastizitätsmodul niedriger als 8000 daN/mm² und/oder höher als 3000 daN/mmm² aufweisen.

13. Verwendung einer montierten Einheit nach einem der Ansprüche 1 bis 12 bei einem Straßenfahrrad.
